# FASCICULE DE BREVET EUROPEEN

(11) **EP 1 583 617 B1**
(45) Date de publication et mention de la délivrance du brevet: **30.04.2008**
(21) Numéro de dépôt: 03815706.1
(22) Date de dépôt: 29.12.2003
(51) Int. Cl.: B07C 5/18

(54) **DISPOSITIF DE CONVOYAGE DE PRODUITS, NOTAMMENT DE FRUITS OU LEGUMES, ADAPTE POUR EFFECTUER UN TRIAGE DES PRODUITS AU MOINS EN FONCTION DE LEUR POIDS**
PRODUKTFÖRDERVORRICHTUNG, INSBESONDERE FÜR OBST ODER GEMÜSE, DIE ZUMINDEST FÜR DAS AUF GEWICHT BASIERENDE SORTIEREN DER PRODUKTE AUSGELEGT IST
PRODUCT CONVEYING DEVICE, IN PARTICULAR FOR FRUITS OR VEGETABLES, ADAPTED TO AT LEAST WEIGHT-BASED SORTING OF THE PRODUCTS

(30) Priorité: 09.01.2003 FR 0300173
(43) Date de publication de la demande: 12.10.2005
(73) Titulaire: Calibrex, 84300 Cavaillon (FR)
(72) Inventeur: DURAND, Michel, F-84800 Lagnes (FR)
(74) Mandataire: Jaunez, Xavier
(86) Numéro de dépôt international: PCT/FR2003/003926
(87) Numéro de publication internationale: WO 2004/069433

(56) Documents cités:
- EP-A- 0 060 013
- US-B1- 6 484 866

## Description

### DOMAINE DE L'INVENTION

L'invention concerne un dispositif de convoyage de produits, notamment de fruits ou légumes, et plus particulièrement un dispositif adapté pour effectuer un triage des produits au moins en fonction de leur poids.

### ARRIERE-PLAN TECHNOLOGIQUE

On connaît déjà de nombreux dispositifs qui utilisent une chaîne d'alimentation, avec un système permettant de singulariser les produits, de façon que chaque produit individuel repose sur un support et avance au niveau d'une station de pesage permettant d'effectuer un tri sélectif des produits en fonction de leur poids.

On pourra par exemple se référer aux documents US-A-4 957 619, EP-A-0 670 276, EP-A-0 568 763, EP-A-0 540 126, WO-A-92 18 258, et FR-A- 2 748 220.

Dans ces dispositifs connus, les produits sont supportés par des godets, ou par des mains de convoyage montées basculantes, ou par des paires de diabolos à gorge circulaire, ou encore par des vis sans fin parallèles entre lesquelles sont disposées des coupelles à coulissement vertical. Le pesage des produits s'effectue avec un soulèvement du support concerné au poste de pesage, ou avec un soulèvement du produit pour le dégager de la paire de diabolos ou de la paire de vis sans fin concernée.

On connaît également des dispositifs de convoyage dont les chariots roulants ou frottants sont montés pour pouvoir basculer vers le bas ou vers le haut autour d'un axe transversal, comme cela est illustré dans les documents US-A-4 262 827, BE-C-1 007 004, FR-A-2 545 797, et FR-A-2 580 393. Un tel agencement induit toutefois un encombrement en hauteur très important, de sorte qu'il est pratiquement abandonné maintenant au profit des systèmes à basculement latéral, c'est-à-dire à pivotement autour d'un axe parallèle à la direction de convoyage.

L'état de la technique est également illustré par le document FR-A-2 670 691, qui décrit un dispositif de convoyage comportant un convoyeur équipé de chariots montés pour basculer latéralement et portant chacun une paire de diabolos formant support d'un produit individuel à trier en fonction de son poids. Cependant, le chariot supportant une paire de diabolos a un poids propre relativement important, de sorte que chaque chariot exerce de facto des frottements non négligeables sur les glissières d'appui, lesquels frottements induisent des vibrations ayant pour effet de perturber plus ou moins les mesures de poids effectuées.

Le document FR-A-2 749 196 décrit un autre type de dispositif de convoyage de produits, comportant deux convoyeurs imbriqués, dont l'un est équipé de coupelles et l'autre de rouleaux. Chaque coupelle s'intercale ainsi entre deux rouleaux, ce qui facilite l'individualisation des produits.

L'état de la technique le plus proche de l'invention est illustré par le document FR-A-2 777 809. Ce document illustre ainsi un dispositif comportant un convoyeur équipé de coupelles destinées à supporter individuellement les produits à trier et à défiler sur une platine fixe, lesdites coupelles étant attelées à un organe mobile pouvant basculer latéralement par rapport auxdits organes pour l'éjection sélective des produits convoyés, et un plateau de pesage étant intercalé dans la longueur de la platine fixe de façon que chaque coupelle passe individuellement sur ledit plateau de pesage, conformément à la revendication 1. Les coupelles utilisées sont des coupelles roulantes à double articulation, ce qui permet, grâce à la souplesse de l'articulation utilisée, d'avoir des performances déjà très satisfaisantes, en particulier une précision de 1 à 2 grammes pour le pesage des produits.

L'ensemble des dispositifs de convoyage précités de la technique antérieure sont agencés pour une direction de convoyage rectiligne. Un tel agencement est en effet favorable pour les performances, dans la mesure où la technologie en la matière est maintenant bien maîtrisée. Cependant, les dispositifs de convoyage de ce type restent très encombrants, et leur prix est relativement élevé.

On a également proposé une calibreuse de fruits présentant une structure d'agencement circulaire, comme illustré dans le document EP-A-0 060 013. Dans cette calibreuse, les coupelles sont articulées sur des supports individuels montés flottants sur un plateau tournant, au voisinage de la périphérie de celui-ci. Les supports reposent donc normalement sur le plateau tournant, et sont soulevés au niveau du poste de pesage en passant sur des rails associés. Une telle structure est cependant assez complexe, et n'est pas prévue pour des vitesses de défilement élevées.

On pourra enfin se référer, pour une connaissance complète de l'arrière-plan technologique, au document US-A-6 484 866, qui illustre un convoyeur d'objets du type à palettes attelées les unes derrière les autres et équipées chacune d'un plateau pivotant. Il est à noter qu'il ne s'agit pas d'une calibreuse pondérale.

### OBJET DE L'INVENTION

La présente invention vise à concevoir un dispositif de convoyage de produits permettant à la fois d'avoir un faible encombrement et un bas niveau de prix par rapport aux dispositifs antérieurs précités.

### DEFINTION GENERALE DE L'INVENTION

Ce problème est résolu selon l'invention grâce à un dispositif de convoyage de produits comportant un convoyeur équipé de coupelles destinées à supporter individuellement les produits à trier et à défiler sur une platine fixe, lesdites coupelles étant attelées à un organe mobile en pouvant basculer latéralement par rapport auxdits organes pour l'éjection sélective des produits convoyés, et un plateau de pesage étant intercalé dans la longueur de la platine fixe de façon que chaque coupelle passe individuellement sur ledit plateau de pesage, ledit convoyeur étant essentiellement circulaire, avec une platine agencée sous la forme d'une couronne circulaire fixe d'axe vertical, et un organe mobile agencé sous la forme d'une couronne circulaire rotative entourant la couronne fixe précitée et entraînée en rotation autour dudit axe par un moyen d'entraînement associé, les coupelles étant articulées sur la périphérie intérieure de la couronne mobile en pouvant basculer par pivotement autour d'axes circonférentiels respectifs en vue d'une éjection sélective des produits dans une direction radialement extérieure.

A l'instar du dispositif de convoyage de type rectiligne décrit dans le document FR-A-2 777 809, il est prévu un plateau de pesage en forme de chevron, mais qui est ici agencé avec une géométrie tenant compte de la circularité des composants. C'est ainsi que la couronne circulaire fixe inclut en l'espèce un plateau de pesage en forme de chevron dont les bords latéraux sont cintrés, et dont la pointe est dirigée dans le sens du déplacement des coupelles défilant sur ladite couronne fixe. En particulier, les coupelles sont équipées de roulettes pour leur déplacement sur la couronne circulaire fixe, et le plateau de pesage en forme de chevron est agencé de telle façon que toutes les roulettes d'une même coupelle soient simultanément au contact dudit plateau lors du pesage.

Avantageusement encore, la couronne circulaire rotative repose sur des galets d'axe horizontal radial par rapport à l'axe de ladite couronne.

Il sera en outre intéressant que la couronne circulaire rotative soit centrée sur son axe par des galets d'axe vertical venant au contact de la périphérie extérieure de ladite couronne.

De préférence alors, l'un au moins des galets d'axe horizontal ou vertical est couplé à un moteur pour former le moyen d'entraînement de la couronne circulaire rotative.

De préférence encore, le dispositif comporte un plateau central fixe essentiellement circulaire, sur la périphérie duquel sont fixées des cames en dos d'âne associées à des postes périphériques de réception des produits éjectés sélectivement, chaque coupelle présentant, à l'opposé de son axe d'articulation, un doigt coopérant avec l'une desdites cames lorsqu'une aiguille mobile associée est actionnée. En particulier, chaque aiguille mobile sera agencée dans une direction circonférentielle, et sera reliée à un électro-aimant d'actionnement associé fixé au plateau central.

De préférence encore, la couronne circulaire rotative présente des encoches de repérage agencées selon une direction circonférentielle, permettant un comptage des coupelles au moyen d'un capteur fixe repérant le passage desdites encoches lors de la rotation de ladite couronne circulaire rotative.

Avantageusement enfin, le dispositif comporte des éléments de capotage horizontaux entourant la couronne circulaire rotative en étant directement adjacents et coplanaires à celle-ci, lesdits éléments formant des plateaux entre ladite couronne rotative et des bacs périphériques de réception des produits sélectivement éjectés.

D'autres caractéristiques et avantages de l'invention apparaîtront plus clairement à la lumière de la description qui va suivre et des dessins annexés concernant un mode de réalisation particulier.

### BREVE DESCRIPTION DES DESSINS

Il sera fait référence aux figures où :
- la figure 1 est une vue générale en perspective illustrant un dispositif de convoyage conforme à l'invention ;
- la figure 2 est une vue analogue à celle de la figure 1, après enlèvement des plateaux latéraux de réception et du convoyeur d'alimentation ;
- la figure 3 est une vue de dessus du dispositif tel qu'illustré en perspective à la figure 2 ;
- la figure 4 est une vue en perspective analogue à celle de la figure 2, dans laquelle on a enlevé la couronne circulaire rotative ainsi que l'ensemble des coupelles qui sont articulées sur la périphérie intérieure de ladite couronne, ceci pour mieux distinguer les galets associés à ladite couronne, et la platine fixe sur laquelle se déplacent les coupelles, qui est agencée sous la forme d'une couronne circulaire fixe d'axe vertical;
- la figure 5 est une vue de dessus de l'ensemble illustré en perspective à la figure 4;
- la figure 6 est une coupe partielle selon un plan radial par rapport à l'axe vertical de rotation des coupelles, à une échelle agrandie, permettant de mieux distinguer l'agencement des couronnes circulaires coaxiales et le mouvement des coupelles articulées, l'une de celle-ci étant en position de pivotement maximum pour l'éjection du produit concerné ;
- la figure 7 est une vue en élévation de cames en dos d'âne associées au basculement sélectif des coupelles ; et
- la figure 8 est une vue de dessus isolée du plateau de pesage en forme de chevron qui est intercalé dans la longueur de la couronne circulaire fixe formant platine pour le roulement des coupelles en défilement.

### DESCRIPTION DU MODE DE REALISATION PREFERE DE L'INVENTION

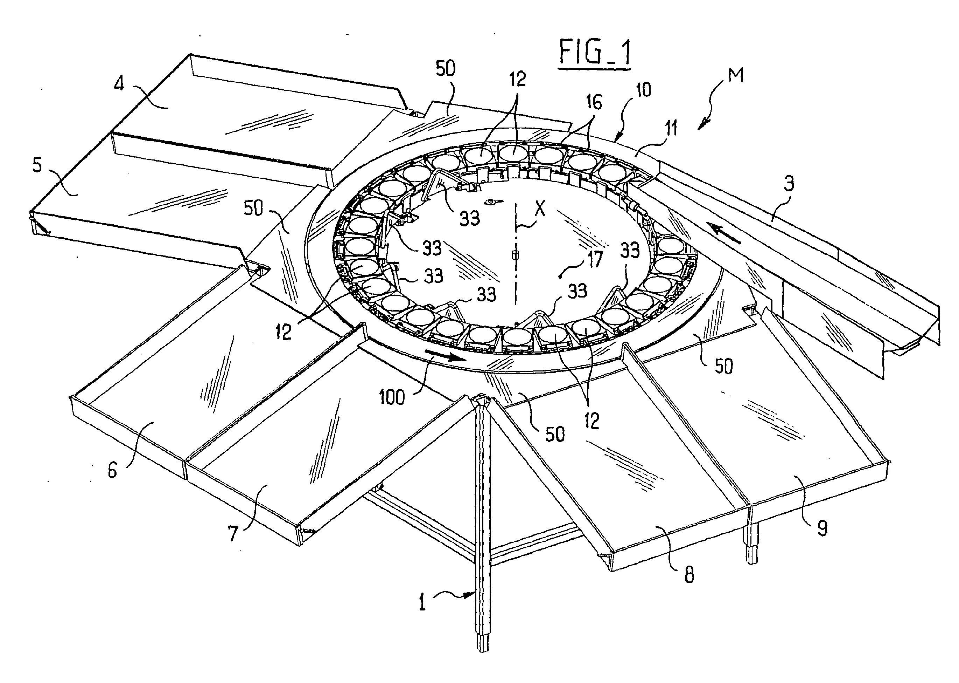

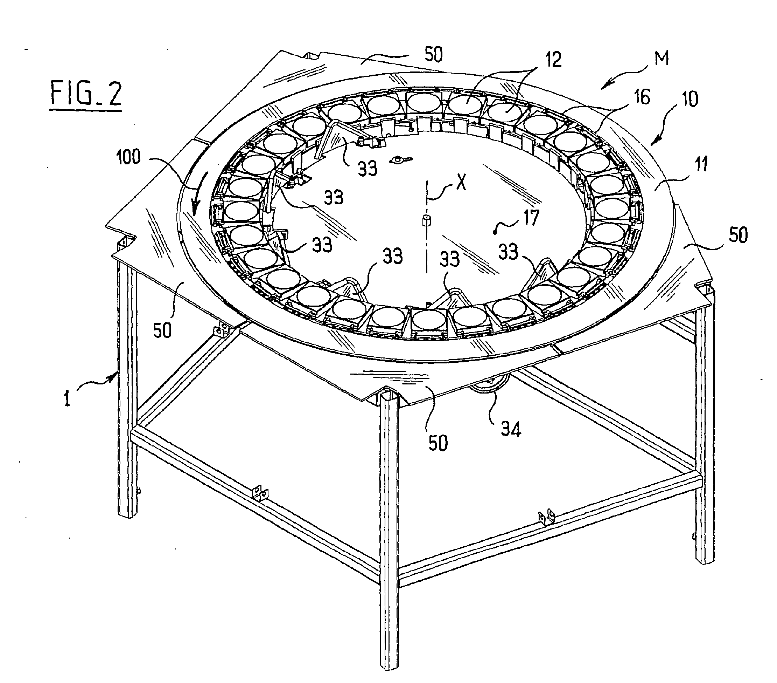

Sur les figures 1 à 3, on distingue un dispositif de convoyage M conforme à l'invention. Un tel dispositif pourra être utilisé pour le triage pondéral de fruits ou légumes de type très divers, tel que les pommes, les pêches, les tomates, les oignons, les abricots, les melons, etc.

Le dispositif M comporte un bâti 1 supportant un convoyeur 10 essentiellement circulaire, qui est équipé de coupelles 12 destinées à supporter individuellement les produits à trier (qui ne sont pas représentés sur les figures) en défilant sur une platine fixe (non visible sur les figures 1 à 3). Les produits à trier arrivent par un convoyeur d'alimentation 3, qui est de préférence un convoyeur à bande. Des bacs périphériques 4, 5, 6, 7, 8, 9 sont agencés latéralement tout autour du bâti, et servent à réceptionner des produits conformément à des critères sélectifs de triage pondéral. En fonctionnement, les coupelles 12 se déplacent ainsi sur une trajectoire circulaire autour d'un axe central vertical X, leur couronne d'entraînement commune étant la couronne circulaire rotative 11 qui tourne dans une direction notée 100 autour dudit axe X. Le dispositif comporte des éléments de capotage horizontaux, notés 50, qui entourent la couronne circulaire rotative 11, en étant directement adjacents et coplanaires à celle-ci, lesdits éléments formant des plateaux entre ladite couronne et les bacs périphériques 4 à 9 de réception des produits sélectivement éjectés.

Les figures 1 à 3 permettent ainsi de distinguer le convoyeur 10 avec sa couronne circulaire rotative 11 sur la périphérie intérieure de laquelle sont articulées les coupelles 12 en pouvant basculer par pivotement autour d'axes circonférentiels respectifs en vue d'une éjection sélective dans une direction radialement extérieure.

On distingue également la présence d'un plateau central fixe 17 essentiellement circulaire, sur la périphérie duquel sont fixées des cames en dos d'âne 33 associées aux postes périphériques 4 à 9 de réception des produits éjectés sélectivement. Comme cela sera décrit plus en détail par la suite, chaque coupelle 12 présente, à l'opposé de son axe d'articulation, un doigt coopérant avec l'une de ces cames en dos d'âne 33 lorsqu'une aiguille mobile associée est actionnée. Ainsi, et conformément au principe général du calibrage pondéral décrit en détail dans le document FR-A-2 777 809, l'unité centrale de commande du dispositif de convoyage reçoit les signaux donnés par le dispositif de pesage, et envoie des signaux en vue de l'actionnement des aiguilles mobiles concernées pour commander le basculement des coupelles lorsqu'elles arrivent au niveau des cames en dos d'âne concernées, afin d'éjecter le produit dans le bac périphérique de réception qui est associé à la direction d'éjection radiale dudit produit.

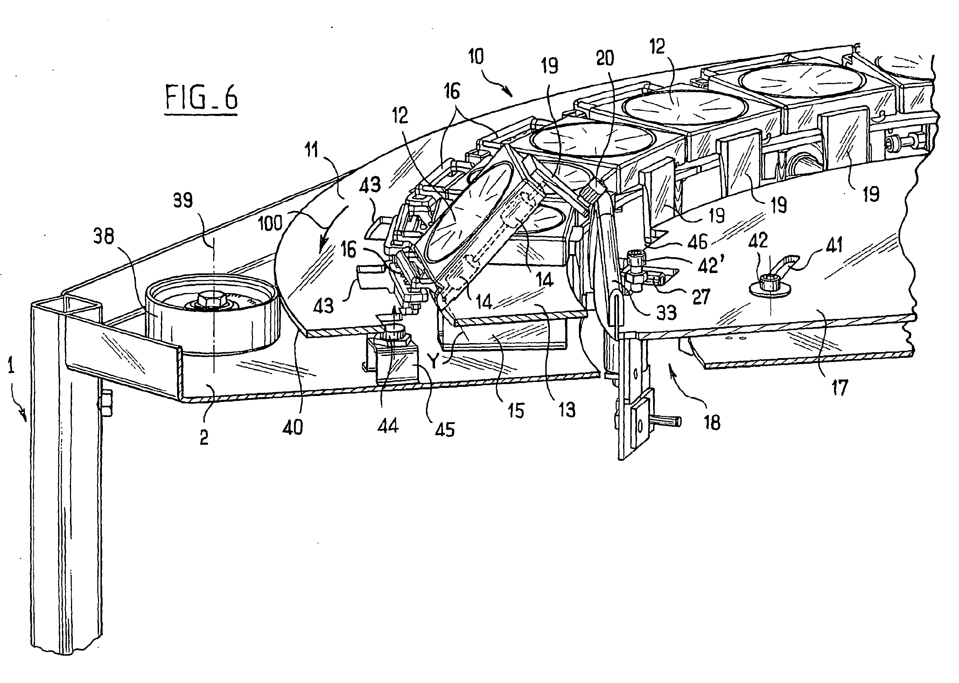

On a noté 16 les ensembles d'articulation de chaque coupelle 12 sur la périphérie intérieure de la couronne circulaire rotative 11. L'agencement de cette articulation est mieux visible sur la figure 6, et sera de préférence réalisé selon le principe de la double articulation qui est divulgué dans le document FR-A-2 777 809 précité.

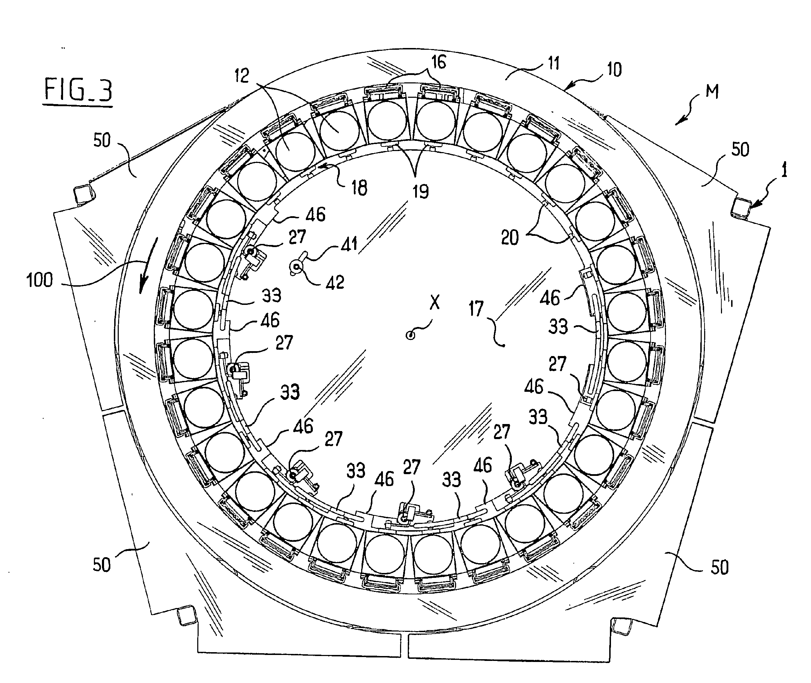

Sur la vue de dessus de la figure 3, on distingue des moyens de commande associés à chaque aiguille précitée, chaque came en dos d'âne 33 (sauf éventuellement la dernière) étant précédée, par référence au sens de rotation 100, par un tel dispositif d'aiguillage noté 27.

On notera la présence d'une lumière circonférentielle 41 et d'un dispositif de verrouillage associé 42, qui permettent de régler avec précision la position angulaire du plateau fixe 17 sur le bâti 1 du convoyeur, la fixation en position étant assurée par une vis droite 42' (mieux visible sur la figure 6), ceci afin de caler angulairement avec précision l'emplacement des différentes cames en dos d'âne 33. La figure 3 permet également de distinguer la présence d'encoches périphériques 46 prévues sur le bord extérieur du plateau fixe 17, et qui sont associées au passage des galets 20 coopérant avec chaque dispositif d'aiguillage 27.

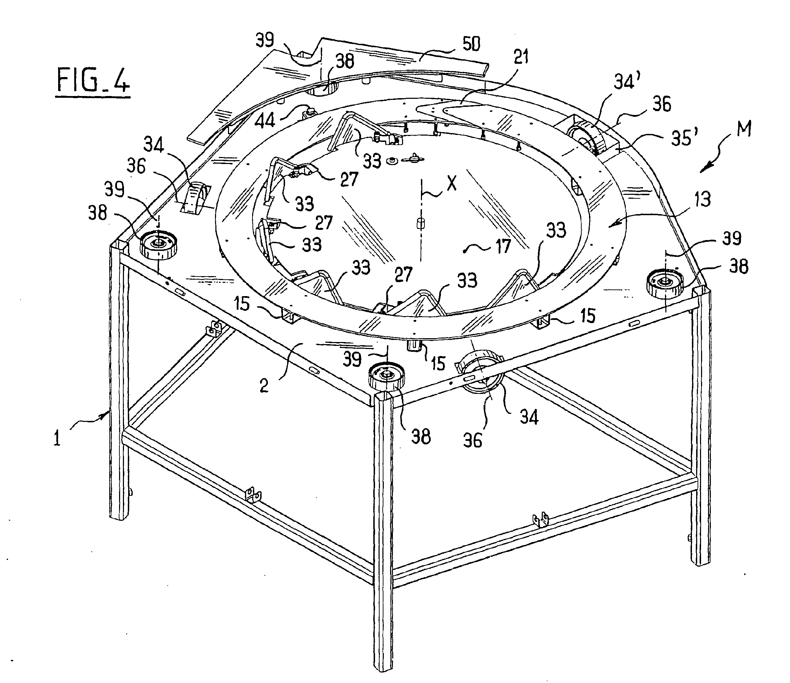

Les figures 4 à 6 permettent de mieux distinguer le plateau horizontal 2 faisant partie du châssis, qui sert de support à l'ensemble du convoyeur 10. La platine fixe 13 sur laquelle défile les coupelles 12 est donc agencée sous la forme d'une couronne circulaire fixe 13 d'axe vertical X, ladite couronne étant ici fixée sur le plateau 2 du châssis par des profilés radiaux 15 de section carrée ou rectangulaire.

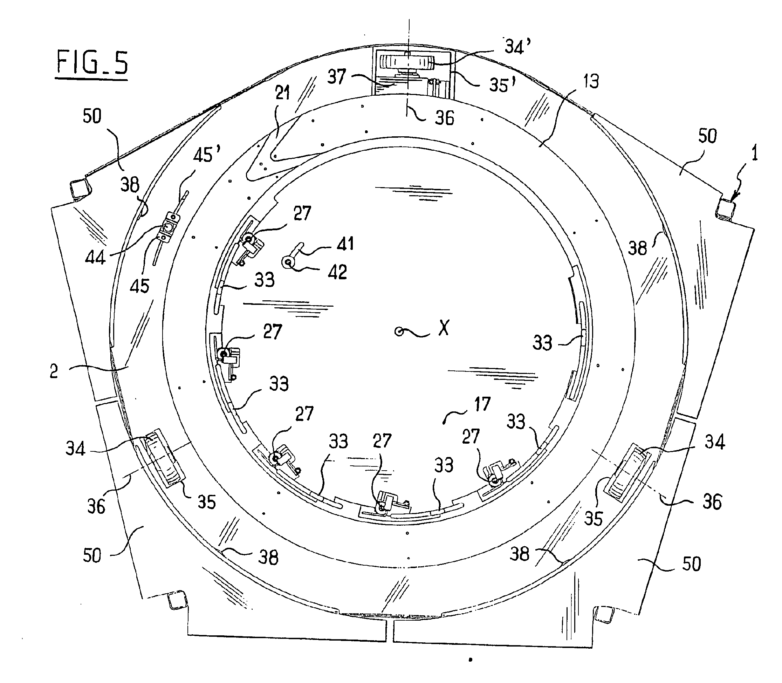

Les figures 4 et 5 permettent en particulier de distinguer le plateau de pesage 21 qui est intercalé dans la longueur de la platine fixe 13 de façon que chaque coupelle 12 passe individuellement sur ledit plateau de pesage. Du fait de l'agencement circulaire du convoyeur, le plateau de pesage 21 a une forme de chevron dont les bords latéraux sont cintrés et dont la pointe est dirigée dans le sens du déplacement des coupelles 12 défilant sur ladite couronne fixe.

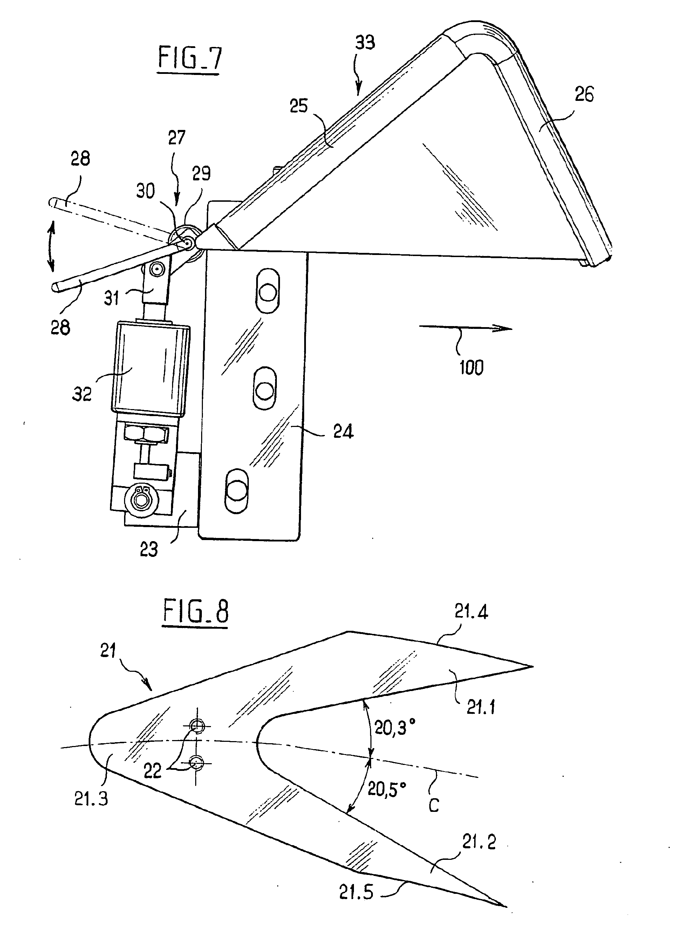

La géométrie particulière du plateau de pesage 21 en forme de chevron sera mieux comprise en se référant à la figure 8, qui montre le plateau de pesage 21 avec ses deux ailes 21.1, 21.2 dont les bords intérieurs font un angle d'environ 20° par rapport à la circonférence médiane C. Les bords latéraux intérieur et extérieur, respectivement 21.5 et 21.4, sont cintrés, et la pointe 21.3 du plateau de pesage 21 en forme de chevron est dirigée dans le sens du déplacement des coupelles. Des taraudages 22 sont prévus pour la fixation du plateau de pesage en forme de chevron 21 sur l'ensemble de pesage qui est de type classique, et non représenté ici.

De préférence, il sera prévu que les coupelles 12 sont équipées de roulettes 14 (seulement visibles sur la figure 6) pour leur déplacement sur la couronne circulaire fixe 13. Le plateau de pesage 21 en forme de chevron sera agencé alors de telle façon que les roulettes d'une même coupelle soit simultanément au contact dudit plateau lors du pesage. Ainsi, pendant un bref instant, la coupelle en défilement repose par ses quatre roulettes sur le plateau de pesage en chevron 21 avec le produit qu'elle supporte, ce qui permet l'opération de pesage.

Les figures 4 et 5 permettent de distinguer également des galets d'axe horizontal radial par rapport à l'axe X sur lesquels repose la couronne circulaire rotative 11. On a ici prévu un ensemble de trois galets, dont deux galets 34 d'axe 36, qui dépassent d'une encoche 35 ménagée à cet effet dans le plateau 2. Ces galets ne sont pas motorisés. Par contre, on a prévu un autre galet 34', dépassant d'une encoche 35', dont l'axe 36 est également radial par rapport à l'axe central X. Cependant, ce dernier galet 34' est calé sur un arbre couplé à l'arbre de sortie d'un moteur électrique 37, pour former le moyen d'entraînement de la couronne circulaire rotative 11. Les trois galets 34, 34,34' seront naturellement disposés de façon symétrique à 120° les uns des autres.

On distingue par ailleurs quatre galets de centrage 38, d'axe vertical 39, venant au contact de la périphérie extérieure 40 de la couronne circulaire rotative 11. Ces galets 38 permettent de garantir un parfait centrage de la couronne circulaire rotative 11 sur son axe vertical X, sans qu'il soit nécessaire de prévoir des rails circulaires de roulement.

En l'espèce, on a prévu que l'un des galets d'axe horizontal, à savoir le galet 34', était un galet motorisé pour former le moyen d'entraînement de la couronne circulaire rotative 11, mais on pourra naturellement prévoir en variante que l'un au moins des galets 38 d'axe vertical est couplé à un moteur pour former ce moyen d'entraînement de la couronne circulaire rotative.

Ainsi que cela a été dit plus haut, le plateau central fixe 17 essentiellement circulaire est équipé sur sa périphérie de cames en dos d'âne 33 associées aux postes périphériques de réception des produits éjectés sélectivement. Si l'on se reporte à la vue de la figure 6, on constate que chaque coupelle 12 présente, en plus de ses roulettes 14, une patte dirigée vers le bas 19 qui se termine par un galet d'axe perpendiculaire 20. Lorsque les coupelles défilent circulairement, en étant entraînées par leur couronne annulaire commune 11, les pattes associées 19 avec leur galet 20 circulent au-dessus d'ouvertures élargies notées 18 qui sont ménagées dans le plateau de support 2, dans un couloir qui est délimité supérieurement entre la périphérie extérieure du plateau fixe 17 et la périphérie intérieure de la couronne annulaire fixe 13.

Dès qu'un galet 20 est amené à grimper sur une came en dos d'âne 33 ceci induit le mouvement de pivotement de la coupelle 12 concernée autour de son axe Y, lequel est disposé selon une direction tangentielle à la circonférence commune des éléments d'articulation 11. Dans les autres cas, le galet 20 passe en dessous du plateau fixe 17, et la coupelle concernée reste dans sa position horizontale de support. La commande de ces deux possibilités est organisée par un système d'aiguille mobile associé à chaque came en dos d'âne 33, et l'on pourra se référer à la vue de la figure 7 qui illustre ces moyens à une échelle très agrandie.

A la figure 7, on distingue ainsi une came en dos d'âne 33 avec une rampe amont 25 et une rampe aval 26, par référence au sens de rotation 100. Une plaque 24 permet, par une plaque 23, de fixer un système d'électro-aimant 32 dont la sortie mobile 31 est associée à un palier 29 supportant la branche radiale d'une aiguille 28 en forme d'équerre. Cette branche radiale, d'axe 30, sert d'axe d'articulation pour la branche principale circonférentielle de l'aiguille 28. Dans la position qui est illustrée en trait continu, le galet 20 de la coupelle 12 concernée passe sur l'aiguille 28, et escalade alors la rampe 25 de la came de dos d'âne 33, ce qui induit le pivotement de la coupelle concernée. Au contraire, dans la position illustrée en trait mixte, l'aiguille 28 est relevée et le galet précité de la coupelle passe en dessous de l'ensemble de came 33, et la coupelle associée reste alors dans sa position horizontale naturelle.

Il est par ailleurs nécessaire de prévoir un comptage des coupelles 12 en défilement, ceci pour une bonne synchronisation avec l'unité générale de commande.

On a prévu à cet effet, la présence d'encoches de repérage 43 qui sont agencées selon une direction circonférentielle sur la couronne circulaire rotative 11. En l'espèce, ces encoches 43 sont constituées par des découpes de la périphérie intérieure de la couronne d'entraînement mobile 11. On pourra naturellement en variante prévoir une autre zone de la couronne rotative 11 pour disposer de telles encoches. Les encoches de repérage 43 permettent un comptage des coupelles 12 au moyen d'un capteur fixe 44 repérant le passage desdites encoches lors de la rotation de la couronne circulaire rotative 11. Le capteur fixe 44 est fixé sur un cavalier 45 lui-même fixé sur le plateau 2 du bâti. Comme cela est visible sur la figure 5, on pourra éventuellement prévoir que le cavalier 45 est fixé au niveau d'une lumière circonférentielle 45' du plateau 2, ce qui permet un positionnement angulaire très précis du capteur 44 de comptage.

On est ainsi parvenu à réaliser un dispositif de convoyage qui est à la fois faiblement encombrant grâce à sa géométrie circulaire, mais aussi de poids modique, dans la mesure où des équipements légers sont nécessaires pour l'entraînement des parties mobiles. En outre, on peut atteindre les mêmes performances de précision et de rendement que les meilleurs convoyeurs de type rectiligne. En effet, tout en conservant la précision de 1 à 2 grammes que l'on obtenait avec les calibreuses rectilignes réalisées conformément au document FR-A-2 777 809 précité, on pourra envisager des vitesses de défilement élevées, pouvant atteindre 10 000 et même 15 000 coupelles par heure. De telles performances rendent donc le présent convoyeur circulaire tout à fait attractif.

L'invention n'est pas limitée aux modes de réalisation qui vient d'être décrits, mais englobe au contraire toute variante reprenant, avec des moyens équivalents, les caractéristiques essentielles énoncées plus haut.

En particulier, on a mentionné le poids comme critère de tri, mais il pourra s'agir d'autres paramètres, comme la couleur ou le taux de sucre par exemple.

## Revendications

1. Dispositif de convoyage de produits, notamment de fruits ou légumes, adapté pour effectuer un triage des produits au moins en fonction de leur poids, ledit dispositif comportant un convoyeur (10) équipé de coupelles (12) destinées à supporter individuellement les produits à trier et à défiler sur une platine fixe (13), lesdites coupelles étant attelées à un organe mobile (11) en pouvant basculer latéralement par rapport audit organe pour l'éjection sélective des produits convoyés, et un plateau de pesage (21) étant intercalé dans la longueur de la platine fixe (13) de façon que chaque coupelle (12) passe individuellement sur ledit plateau de pesage, **caractérisé en ce que** le convoyeur (10) est essentiellement circulaire, avec une platine agencée sous la forme d'une couronne circulaire fixe(13) d'axe vertical (X) et un organe mobile agencé sous la forme d'une couronne circulaire rotative (11) entourant la couronne fixe précitée (13) et entraînée en rotation autour dudit axe par un moyen d'entraînement associé (34', 37), les coupelles (12) étant articulées sur la périphérie intérieure de la couronne mobile (11) en pouvant basculer par pivotement autour d'axes circonférentiels respectifs (Y) en vue d'une éjection sélective des produits dans une direction radialement extérieure.

2. Dispositif de convoyage selon la revendication 1, **caractérisé en ce que** la couronne circulaire fixe (13) inclut un plateau de pesage (21) en forme de chevron dont les bords latéraux (21.4, 21.5) sont cintrés, et dont la pointe (21.3) est dirigée dans le sens du déplacement des coupelles (12) défilant sur ladite couronne fixe.

3. Dispositif de convoyage selon la revendication 2, **caractérisé en ce que** les coupelles (12) sont équipées de roulettes (14) pour leur déplacement sur la couronne circulaire fixe (13), et le plateau de pesage (21) en forme de chevron est agencé de telle façon que toutes les roulettes d'une même coupelle (12) soient simultanément au contact dudit plateau lors du pesage.

4. Dispositif de convoyage selon l'une des revendications 1 à 3, **caractérisé en ce que** la couronne circulaire rotative (11) repose sur des galets (34, 34') d'axe horizontal radial par rapport à l'axe (X) de ladite couronne.

5. Dispositif de convoyage selon l'une des revendications 1 à 4, **caractérisé en ce que** la couronne circulaire rotative (11) est centrée sur son axe (X) par des galets (38) d'axe vertical venant au contact de la périphérie extérieure (40) de ladite couronne.

6. Dispositif de convoyage selon la revendication 4 ou la revendication 5, **caractérisé en ce que** l'un au moins (34') des galets d'axe horizontal ou vertical est couplé à un moteur (37) pour former le moyen d'entraînement de la couronne circulaire rotative (11).

7. Dispositif de convoyage selon l'une des revendications 1 à 6, **caractérisé en ce qu'**il comporte un plateau central fixe (17) essentiellement circulaire, sur la périphérie duquel sont fixées des cames en dos d'âne (33) associées à des postes périphériques (4 à 9) de réception des produits éjectés sélectivement, chaque coupelle (12) présentant, à l'opposé de son axe d'articulation (Y), un doigt (19, 20) coopérant avec l'une desdites cames lorsqu'une aiguille mobile associée (28) est actionnée.

8. Dispositif de convoyage selon la revendication 7, **caractérisé en ce que** chaque aiguille mobile (28) est agencée dans une direction circonférentielle, et est reliée à un électro-aimant d'actionnement associé. (32) fixé au plateau central (17).

9. Dispositif de convoyage selon l'une des revendications 1 à 8, **caractérisé en ce que** la couronne circulaire rotative (11) présente des encoches de repérage (43) agencées selon une direction circonférentielle, permettant un comptage des coupelles (12) au moyen d'un capteur fixe (44) repérant le passage desdites encoches lors de la rotation de ladite couronne circulaire rotative.

10. Dispositif de convoyage selon l'une des revendications 1 à 9, **caractérisé en ce qu'**il comporte des éléments de capotage horizontaux (50) entourant la couronne circulaire rotative (11) en étant directement adjacents et coplanaires à celle-ci, lesdits éléments formant des plateaux entre ladite couronne rotative et des bacs périphériques (4 à 9) de réception des produits sélectivement éjectés.

## Claims

1. A device for conveying produce, in particular fruit or vegetables, the device being adapted to sort items of produce at least as a function of weight, said device comprising a conveyor (10) fitted with cups (12) for supporting individual items of produce for sorting and for traveling along a stationary plate (13), said cups being coupled to a movable member (11) and being capable of tilting sideways relative to said member for selectively ejecting the produce being conveyed, and a weighing tray (21) being interposed in the length of the stationary plate (13) so that each cup (12) passes individually over said weighing tray, the device being **characterized in that** the conveyor (10) is essentially circular, with a plate arranged in the form of a stationary circular ring (13) about a vertical axis (X) and with a movable member arranged in the form of a rotary circular ring (11) surrounding the above-mentioned stationary ring (13) and driven in rotation about said axis by associated drive means (34', 37), the cups (12) being hinged to the inner periphery of the moving ring (11) and being capable of tilting by pivoting about respective circumferential axes (Y) in order to eject items of produce selectively in a radially-outward direction.

2. A conveyor device according to claim 1, **characterized in that** the stationary circular ring (13) includes a weighing tray (21) that is V-shaped with two side edges (21.4, 21.5) that are angled, and with its tip (21.3) pointing in the travel direction of the cups (12) traveling on said stationary tray.

3. A conveyor device according to claim 2, **characterized in that** the cups (12) are fitted with wheels (14) enabling them to travel on the stationary circular ring (13), and the V-shaped weighing tray (21) is arranged in such a manner that all of the wheels of a single cup (12) are simultaneously in contact with said tray while weighing is taking place.

4. A conveyor device according to any one of claims 1 to 3, **characterized in that** the rotary circular ring (11) is supported by wheels (34, 34') having horizontal axes that are radial relative to the axis (X) of said ring.

5. A conveyor device according to any one of claims 1 to 4, **characterized in that** the rotary circular ring (11) is centered on its axis (X) by vertical-axis wheels (38) coming into contact with the outer periphery (40) of said ring.

6. A conveyor device according to claim 4 or claim 5, **characterized in that** at least one of the horizontal-axis or vertical-axis wheels (34') is coupled to a motor (37) to constitute means for driving the circular ring (11) in rotation.

7. A conveyor device according to any one of claims 1 to 6, **characterized in that** it includes an essentially circular stationary central shelf (17) having humpbacked cams (33) secured to its periphery and associated with peripheral stations (4 to 9) for receiving selectively-ejected items of produce, each cup (12) presenting a finger (19, 20), opposite from its hinge axis (Y), and suitable for co-operating with one of said cams in the event of an associated movable pin (28) being actuated.

8. A conveyor device according to claim 7, **characterized in that** each movable pin (28) is arranged in a circumferential direction and is connected to an associated actuator electromagnet (32) secured to the central shelf (17).

9. A conveyor device according to any one of claims 1 to 8, **characterized in that** the rotary circular ring (11) presents position-identifying notches (43) arranged in a circumferential direction, enabling the cups (12) to be counted by means of a stationary counter (44) identifying the passage of said notches during rotation of said rotary circular ring.

10. A conveyor device according to any one of claims 1 to 9, **characterized in that** it includes horizontal cover elements (50) surrounding the rotary circular ring (11) and located directly adjacent thereto and coplanar therewith, said elements forming shelves between said rotary ring and peripheral bins (4 to 9) for receiving the selectively-ejected produce.

## Patentansprüche

1. Fördervorrichtung für Produkte, insbesondere Obst oder Gemüse, die dazu geeignet ist, ein Sortieren der Produkte zumindest in Abhängigkeit von deren Gewicht durchzuführen, wobei die Vorrichtung einen Förderer (10) umfasst, der mit Schalen (12) ausgerüstet ist, die dazu bestimmt sind, die zu sortierenden Produkte einzeln zu tragen und über eine ortsfeste Platte (13) zu laufen, wobei die genannten Schalen an ein bewegliches Element (11) gekoppelt sind, indem sie seitwärts relativ zu dem genannten Element kippen können, um die beförderten Produkte selektiv auszuwerfen, und wobei eine Wiegeplatte (21) in Längsrichtung der ortsfesten Platte (13) derart eingefügt ist, dass jede Schale (12) einzeln über die genannte Wiegeplatte läuft, **dadurch gekennzeichnet, dass** der Förderer (10) im Wesentlichen kreisförmig ist, mit einer Platte, die in Form eines ortsfesten kreisförmigen Kranzes (13) mit vertikaler Achse (X) ausgebildet ist, und mit einem beweglichen Element, das in Form eines sich drehenden kreisförmigen Kranzes (11) ausgebildet ist, der den vorgenannten ortsfesten Kranz (13) umgibt und von dazugehörigen Antriebsmitteln (34', 37) zur Drehung um die genannte Achse angetrieben wird, wobei die Schalen (12) am inneren Rand des beweglichen Kranzes (11) angelenkt sind, indem sie durch Verschwenken um jeweilige Umfangsachsen (Y) kippen können, um die Produkte in eine radial äußere Richtung selektiv auszuwerfen.

2. Fördervorrichtung nach Anspruch 1, **dadurch gekennzeichnet, dass** der ortsfeste kreisförmige Kranz (13) eine Wiegeplatte (21) in Form eines Winkels umfasst, dessen seitliche Ränder (21.4, 21.5) gewölbt sind und dessen Spitze (21.3) in die Bewegungsrichtung der auf dem genannten ortsfesten Kranz vorbeilaufenden Schalen (12) zeigt.

3. Fördervorrichtung nach Anspruch 2, **dadurch gekennzeichnet, dass** die Schalen (12) für ihre Bewegung auf dem ortsfesten kreisförmigen Kranz (13) mit Rollen (14) versehen sind und die Wiegeplatte (21) in Form eines Winkels derart ausgebildet ist, dass alle Rollen ein und derselben Schale (12) beim Wiegen gleichzeitig mit der genannten Platte in Kontakt stehen.

4. Fördervorrichtung nach einem der Ansprüche 1 bis 3, **dadurch gekennzeichnet, dass** der sich drehende kreisförmige Kranz (11) auf Rollen (34, 34') aufliegt, die in Bezug auf die Achse (X) des genannten Kranzes eine radiale horizontale Achse haben.

5. Fördervorrichtung nach einem der Ansprüche 1 bis 4, **dadurch gekennzeichnet, dass** der sich drehende kreisförmige Kranz (11) auf seine Achse (X) mittels Rollen (38) mit vertikaler Achse zentriert ist, die mit dem äußeren Rand (40) des genannten Kranzes in Kontakt kommen.

6. Fördervorrichtung nach Anspruch 4 oder Anspruch 5, **dadurch gekennzeichnet, dass** mindestens eine (34') der Rollen mit horizontaler oder vertikaler Achse an einen Motor (37) gekoppelt ist, um die Antriebsmittel für den sich drehenden kreisförmigen Kranz (11) zu bilden.

7. Fördervorrichtung nach einem der Ansprüche 1 bis 6, **dadurch gekennzeichnet, dass** sie eine ortsfeste zentrale Platte (17) umfasst, die im Wesentlichen kreisförmig ist und an deren Rand Nocken (33) mit Kuppen befestigt sind, die Umfangsstationen (4 bis 9) zur Aufnahme der selektiv ausgeworfenen Produkte zugeordnet sind, wobei jede Schale (12) entgegengesetzt zu ihrer Gelenkverbindungsachse (Y) einen Finger (19, 20) aufweist, der mit einem der genannten Nocken zusammenwirkt, wenn eine dazugehörige bewegliche Weiche (28) betätigt wird.

8. Fördervorrichtung nach Anspruch 7, **dadurch gekennzeichnet, dass** jede bewegliche Weiche (28) in Umfangsrichtung angeordnet und mit einem dazugehörigen Elektromagneten (32) zur Betätigung verbunden ist, der an der zentralen Platte (17) befestigt ist.

9. Fördervorrichtung nach einem der Ansprüche 1 bis 8, **dadurch gekennzeichnet, dass** der sich drehende kreisförmige Kranz (11) Bezugsausschnitte (43) aufweist, die in Umfangsrichtung ausgebildet sind und ein Zählen der Schalen (12) mittels eines ortsfesten Sensors (44) ermöglichen, der das Vorbeilaufen der genannten Ausschnitte während der Drehung des genannten sich drehenden kreisförmigen Kranzes erfasst.

10. Fördervorrichtung nach einem der Ansprüche 1 bis 9, **dadurch gekennzeichnet, dass** sie horizontale Verkleidungselemente (50) umfasst, die den sich drehenden kreisförmigen Kranz (11) umgeben, indem sie direkt an diesen angrenzen und koplanar zu demselben sind, wobei die Elemente zwischen dem genannten sich drehenden Kranz und den Umfangsbehältern (4 bis 9) zur Aufnahme der selektiv ausgeworfenen Produkte Platten bilden.
